# EUROPÄISCHE PATENTSCHRIFT

(11) **EP 3 900 973 B1**
(45) Veröffentlichungstag und Bekanntmachung des Hinweises auf die Patenterteilung: **27.05.2026**
(21) Anmeldenummer: 21169865.9
(22) Anmeldetag: 22.04.2021
(51) Int. Cl.: B60L 53/00, B60L 15/42, G08G 1/01, G01C 21/00, B60L 53/68, B60L 53/80, G08G 1/00

(54) **VERKEHRSFLUSSSTEUERUNG VON FAHRZEUGEN UND MOBILE E-TANKSTELLEN**
TRAFFIC FLOW CONTROL FOR VEHICLES AND MOBILE CHARGING POINTS
COMMANDE DU FLUX DE LA CIRCULATION DES VÉHICULES ET DES STATIONS DE RECHARGEMENT ÉLECTRIQUE MOBILES

(30) Priorität: 23.04.2020 DE 102020111148
(43) Veröffentlichungstag der Anmeldung: 27.10.2021
(73) Patentinhaber: Deutsche Telekom AG, 53113 Bonn (DE)
(72) Erfinder: Huber, Michael, 67434 Neustadt a. d. W. (DE)
(74) Vertreter: karo IP

(56) Entgegenhaltungen:
- US-A1- 2019 164 418
- US-A1- 2019 351 783

## Beschreibung

Der Verkehr auf den Straßen, der vornehmlich durch PKWs und LKWs verursacht wird, stößt nicht nur in Deutschland, sondern auch weltweit immer häufiger an Kapazitätsgrenzen. Unter Kapazitätsgrenzen ist zu verstehen, dass zu viele Fahrzeuge für die vorhandene Infrastruktur, also insbesondere für die Straßen, am Verkehr teilnehmen, sodass regelmäßig lange Staus entstehen, die zu einem Zeitverlust und zu zusätzlichem Kraftaufwand bzw. Energieverbrauch führen. Vor allem an einigen "Hotspots" ist ein Verkehrsfluss ohne Stau leider eher die Ausnahme als die Regel. Es ist zu erwarten, dass sich diese Zustände in der Zukunft eher noch verschlechtern als verbessern. Eine der Gründe ist das über die Jahre immer weiter ansteigende Verkehrsaufkommen und der Zuzug der Bevölkerung in die Städte. Eine Verbesserung dieses Zustands durch den Zubau von Infrastruktur, also insbesondere durch den Bau von neuen Straßen und/oder Parkplätzen, ist teuer, zeitaufwendig und aufgrund von baulichen Beschränkungen nicht immer möglich.

Eine bekannte Ursache für solche Staus ist starkes Abbremsen, starkes Beschleunigen, geringe oder zu große Abstände der Fahrzeuge untereinander, schlechte Antizipation des Verhaltens der anderen Fahrzeuge, Spurwechsel und/oder Geschwindigkeitsunterschiede der Fahrzeuge. Selbst kleine Störung des Verkehrsflusses können bei hohem Verkehrsaufkommen zu Stauwellen führen, die sich in der Folge häufig zu größeren Staus - quasi aus dem Nichts - ausbilden. Jede der vorstehend beschriebenen Aktion sind für den Folgeverkehr Verkehrsstörungen, die sich im schlimmsten Fall potenzieren können. Die einzelnen Pkw bzw. LKW-Fahrer sind damit häufig der größte Störfaktor und damit die Verursacher der Staus. Studien zeigen, dass die vorhandene Infrastruktur ohne den Störfaktor "Mensch" in der Lage wäre ein weitaus höheres Verkehrsaufkommen zuzulassen. Erschwerend kommt hinzu, dass jeder Kraftwagenfahrer individuelle "Fahrziele" hat. Wenn beispielsweise ein Fahrer die Fahrtstrecke von Köln nach Düsseldorf 10 Minuten schneller zurücklegen muss als in andere Fahrer, führt dies zwangsläufig zu einem Unterschied in deren Geschwindigkeit.

Selbst wenn sich die Fahrer in dieser Hinsicht verbessern würden und "gleichmäßiger" fahren würden, sind einer solchen Verbesserung dennoch Grenzen gesetzt, da ein einzelner Fahrer beispielsweise nicht in der Lage ist eine Gesamtsituation einer potentiellen Stauwelle zu überblicken. Er kann immer nur sein nächstes Umfeld beachten und hat keinen Überblick bzw. kann nicht berücksichtigen, was beispielsweise zehn Fahrzeuge vor oder hinter ihm passiert.

Aufgrund der Umweltverträglichkeit und der Endlichkeit der Ressourcen kommt auf die Fahrzeuge außerdem eine Veränderung der Antriebstechnik von mobilen Kraftstoffen zu elektrischen Alternativen (E-Mobilität) zu. Die Themen Mobilität und Logistik sind wichtige Parameter unseres Wirtschaftssystems und deswegen sehr bedeutend. In den nächsten Jahren werden demnach insbesondere die PKWs mit Verbrennungsmotoren schrittweise durch alternative Antriebstechniken ersetzt werden. Im Moment haben e-Autos aufgrund ihrer geringen Reichweite und der nur bedingt vorhandenen Lade-Infrastruktur ein Schattendasein. Mit den zu erwartenden und teilweise schon vorhandenen neuen Techniken bei den Batteriekapazitäten, sind mittel- bis langfristig e-Autos mit einer Reichweite von ca. 600 km bei einem Batteriegewicht von 250 kg bei 75 kWh Kapazität zu erwarten. Es stellt sich allerdings weiterhin die Frage, wie ein leer gefahrener Akku eines e-Autos möglichst effektiv und schnell geladen werden kann.

Zwar gibt es für e-Autos Schnellladestationen, allerdings müssen diese aufgrund ihrer geringen Anzahl zunächst einmal frei sein und zudem dauert das Laden deutlich länger (ca. 30 Minuten) als ein einer herkömmlichen Zapfsäule. Diesbezüglich beschreibt DE 10 2018 118 945 A1 ein Schnellwechselsystem für Batterien von e-Autos.

Bekannt sind zudem intelligente Assistenzsysteme wie etwa Geschwindigkeitsregelanlagen, die heute bereits etablierte "Vorboten" des autonomen Fahrens sind. Es ist allgemein akzeptiert, dass es lediglich eine Frage der Zeit ist bis vollständig autonom fahrende Fahrzeuge verfügbar sind. Bereits zum jetzigen Zeitpunkt werden autonome Fahrzeuge im Linienverkehr für Kleinbusse im Straßenverkehr verwendet. Zum jetzigen Zeitpunkt ist es schon möglich Fahrzeugen Steuerungsbefehle zu übergeben, die von den Fahrzeugen korrekt ausgeführt werden. Die Schwierigkeiten bestehen im Moment letztlich darin dynamische Verkehrssituationen in Echtzeit zu berücksichtigen.

Die US 2019/0164418 A1 zeigt eine Methode und ein System zur Maximierung des Verkehrsflusses zur Steuerung des Verkehrsflusses durch Kombination von klassischem maschinellem Computerlernen zur Vorhersage einer Verkehrsflussminimierung vor ihrem Auftreten zur Optimierung zukünftiger Positionen von Fahrzeugen. Fahrzeuge werden umgeleitet, um die Reisezeit für jedes Fahrzeug zu minimieren und dabei andere Fahrzeuge im Straßennetz zu berücksichtigen.

US 2019/0351783 A1 beschreibt ein System zur Organisation mobiler Ladedienstleistungen für Elektrofahrzeuge mit einem zentralen "charging control server", der Profile/Standorte von Ladeeinheiten verwaltet, Transaktionen überwacht und drahtlos mit EVs kommuniziert. Die Lehre erwähnt sowohl stationäre als auch mobile Ladestationen, die zu gestrandeten Fahrzeugen kommen oder Rendezvous zwischen fahrenden EVs und mobilen Ladestationen dynamisch planen/koordinieren können.

Es ist die Aufgabe der Erfindung ein Verfahren, ein System, eine Betankungseinheit sowie ein Fahrzeug anzugeben, dass die Fahrtdauer für Fahrzeuge optimiert.

Gelöst wird diese Aufgabe mit den Merkmalen der unabhängigen Ansprüche.

Gemäß einem ersten Aspekt der Erfindung ist Verfahren zur Steuerung eines Verkehrsflusses von Fahrzeugen, insbesondere von PKWs, auf öffentlichen Straßen angegeben. Das Verfahren umfasst die Schritte:
Bereitstellen einer zentralen Verkehrsflusssteuerungseinheit, in einem Kommunikationsnetzwerk und Hinterlegen von Infrastrukturinformationen der Straßen auf der zentralen Verkehrsflusssteuerungseinheit,
   bei der zentralen Verkehrsflusssteuerungseinheit kann es sich insbesondere um eine Cloud-Plattform im Internet handeln, die ausgebildet ist Informationen zentral zu sammeln und mittels einer ihr zugeordneten Rechnereinheit auszuwerten. Die Infrastrukturinformationen der Straßen können beispielsweise mittels Straßenkarten hinterlegt werden und machen der zentralen Verkehrsflusssteuerungseinheit bekannt an welchen Stellen die Straßen gegebenenfalls mehrere Spuren aufweisen, Besonderheiten wie Kreisel vorhanden sind und/oder welche Verkehrsregeln an einem bestimmten Ort gelten. Zudem können die Infrastrukturinformationen Information aufweisen, die angeben wie viele Fahrzeuge pro Streckenlänge maximal auf der Straße unterwegs sein sollten, ohne dass dies den Verkehrsfluss nachteilig beeinflusst. Es ist vorteilhaft, wenn diese Infrastruktur Informationen in regelmäßigen Abständen aktualisiert werden.
Aufbau einer Datenverbindung zwischen auf den Straßen fahrender Fahrzeugen und der zentralen Verkehrsflusssteuerungseinheit vermittels des Kommunikationsnetzwerks; wobei die Fahrzeuge zur Kommunikation mit dem Kommunikationsnetzwerk ausgebildeten sind.

Im Rahmen aller Aspekte dieser Erfindung, ist ein Kommunikationsnetzwerk vorzugsweise ein mobiles Kommunikationsnetzwerk, besonders bevorzugt ein 5G fähiges Netz.

Die Kernidee der Erfindung ist, dass die Fahrzeuge Parameter, Ziel- und/oder Statusparameter des Fahrzeugs, an die zentrale Verkehrsflusssteuerungseinheit übertragen und dass ein auf der zentralen Verkehrsflusssteuerungseinheit implementierter Algorithmus auf Basis der Parameter und der Infrastrukturinformationen einen optimierten Verkehrsfluss für eine Gesamtheit der Fahrzeuge und ein individuelles Fahrprofil für die einzelnen Fahrzeuge berechnet, wobei das individuelle Fahrprofil aus dem optimierten Verkehrsfluss extrahiert wird. Die individuellen Fahrprofile ergänzen sich damit quasi zu dem optimierten Verkehrsfluss. Die Fahrzeuge können also insbesondere ihre eigenen Ziel- und/oder Statusparameter übertragen. Bei den Statusparametern handelt es sich um die aktuelle Geschwindigkeit und/oder die Position des Fahrzeugs.

Bei der Berechnung eines Modells für den optimalen Verkehrsfluss wird jedes Fahrzeug, insbesondere die Fahrzeuge deren Statusparameter verfügbar sind verfügbar sind, als Variablen des Modells für den optimierten Verkehrsfluss betrachtet, die bei einer Optimierung des Modells verschiedenen Straßenoptionen zugeordnet werden können. Hierbei werden insbesondere die Zielparameter, also wohin das Fahrzeug fahren möchte, berücksichtigt, sodass das Fahrzeug nur solchen anderen Straßen im Rahmen der Optimierung zugeordnet werden kann, die die Fahrzeit und/oder die Streckenlänge nicht mehr als 10 %, besonders bevorzugt nicht mehr als 5 % verlängern. Weiterhin werden die Infrastrukturinformationen der Straßen berücksichtigt, sodass simuliert werden kann, wie viele Fahrzeuge maximal auf einer bestimmten Fahrzeuglänge fahren sollen und welche Geschwindigkeit diese typischerweise haben.

Die Optimierung kann dahingehend durch einen Algorithmus durchgeführt werden, dass die Gesamtzeit aller beteiligter Fahrzeuge minimiert wird. Diese Optimierung kann beispielsweise mittels eines Simulated Annealing Verfahrens berechnet werden. Das Simulated Annealing Verfahren stellt ein Abbruchkriterium für den Optimierungsprozess hinsichtlich einer Minimierung der Gesamtfahrzeit aller Beteiligten Fahrzeuge bereit. Eine Möglichkeit dieses Optimierungsprozesses ist es zumindest eine Teilmenge Fahrzeuge zufallsbasiert anders auf den Straßen zu gruppieren und zu untersuchen, ob sich hierdurch eine Verringerung der Gesamtfahrzeit ergibt. Ergibt eine solche Umgruppierung einer Teilmenge eine Verbesserung, die über einer zuvor definierten Verbesserungsschwelle liegt, wird die Teilmenge der umgruppierten Fahrzeuge auf den ihnen neu zugeordneten Straßen belassen und die Optimierung mit den übrigen Fahrzeugen auf Grundlage weiterer Teilmengen fortgeführt.

Die Idee des Simulated Annealing Verfahrens kann man sich graphisch wie folgt verdeutlichen:
Angenommen, man sucht in einer zweidimensionalen Landschaft den (global) tiefsten Punkt. Die Landschaft selbst besteht aus vielen unterschiedlich tiefen Dellen. Die einfache Suchstrategie (suche den nächsten tiefsten Punkt) entspricht dem Verhalten einer Kugel, welche in dieser Landschaft ausgesetzt wird. Sie rollt zum nächsten lokalen Minimum und bleibt dort. Bei der simulierten Abkühlung wird der Kugel immer wieder ein Stoß versetzt, der mit zunehmender "Abkühlung" schwächer wird. Dieser ist idealerweise stark genug, um die Kugel aus einer flachen Delle (lokales Minimum) zu entfernen, reicht aber nicht aus, um aus dem globalen Minimum zu fliehen.

Da jedes Fahrzeug als Objekt innerhalb des optimierten Verkehrsflusses simuliert wird, kann die die Simulation des Objekts also dessen Fahrweg - einfach extrahiert und an das entsprechende Fahrzeug als individuelles Fahrprofil gesendet werden.

Ein Fahrzeug im Rahmen der Erfindung kann insbesondere ein Pkw oder ein Lkw sein. Bei den Parametern, die das Fahrzeuge an die zentrale Verkehrssteuerungseinheit übergibt, kann es sich beispielsweise um Zielparameter handeln, die angeben an welchen Ort der Verkehrsteilnehmer mit seinem Fahrzeug fahren möchte und zu welcher Zeit er dort ankommen will. Bei den Statusparametern kann es sich um die Ortsposition und den Geschwindigkeitsvektor des Fahrzeuges und der anderen Fahrzeuge auf den Straßen handeln. Mit diesen Informationen ist es dem Algorithmus der zentralen Verkehrssteuerungseinheit möglich einen Gesamtüberblick über die Verkehrssituation aller Fahrzeuge, bzw. aller an den Verfahren teilnehmenden Fahrzeuge, zu erlangen und vorausschauend einen optimalen Verkehrsfluss für die Gesamtheit der Fahrzeuge zu berechnen. Eine Möglichkeit ist es hierbei, dass die Fahrzeit für alle Fahrzeuge minimiert wird. Dies kann zudem unter Berücksichtigung der Gesamtstrecke gewichtet werden, da ein Zeitverlust von beispielsweise 10 Minuten auf 100 km weniger stark ins Gewicht fällt als auf 10 km. Als Kommunikationsnetzwerks kann vorteilhaft ein 5G Netz verwendet werden, da dies auf die Bedürfnisse des Verfahrens besonders gut angepasst werden kann und geringe Latenzzeiten aufweist. Vorzugsweise findet diese vorausschauende Verkehrssteuerung auf Autobahnen und Schnellstraßen statt, da die Fahrzeuge in diesem Fall besser mit gleichförmigen Geschwindigkeiten fahren können. Das individuelle Fahrprofil kann einem Fahrer beispielsweise über ein Display seines Fahrzeugs als Steuerbefehle bekannt gemacht werden. Die Steuerbefehle können beispielsweise beinhalten wie schnell der Fahrer fahren soll und auf welcher Spur er sich einzuordnen hat.

Durch dieses Verfahren ergeben sich also unter anderem die Vorteile, dass ein gleichmäßig fließender Verkehr generiert wird, wodurch auf den Straßen die Kapazität erhöht wird und sich die Fahrzeuge im Mittel schneller fortbewegen.

Eine direkte Folge hieraus ist eine Verbesserung des Umweltschutzes durch weniger Staus und der hieraus resultierenden Energieeinsparung. Dem einzelnen Fahrer, dem ist nicht möglich ist die Gesamtverkehrssituation zu überblicken, kann also mittels der Steuerbefehle so fahren, als ob er die Gesamtverkehrssituation überblicken würde.

Bevorzugt wird das individuelle Fahrprofil als Steuerbefehl von der zentralen Verkehrsflusssteuerungseinheit über das Kommunikationsnetzwerk an das ihm zugeordnete Fahrzeug übertragen wird.

Dies bietet den Vorteil, dass das schon vorhandene Kommunikationsnetz effektiv genutzt werden kann, um dem Fahrzeuge die Steuerbefehle bekanntzumachen.

In einer Ausführungsform weist das Fahrzeug einen Bordcomputer auf, der eingerichtet ist das Fahrzeug zumindest teilautomatisiert zu steuern und dass der Bordcomputer den Steuerbefehl ausführt.

Dies bietet den Vorteil, dass der Faktor Mensch, der zumeist nicht der Lage ist die Steuerbefehle zu 100 % zu verfolgen, durch den Bordcomputer ersetzt werden kann der das Fahrzeug automatisiert steuert. Je mehr solcher Bordcomputer bei den Fahrzeugen installiert sind, desto höher ist die "Compliance" des Verfahrens, woraus ein besserer Verkehrsfluss folgt.

Bevorzugt berechnet der Algorithmus den optimierten Verkehrsfluss bei einer Änderung der Infrastrukturinformationen und/oder der Parameter erneut. Eine solche Änderung kann beispielsweise auftreten, wenn neue Fahrzeuge an den Verkehr teilnehmen oder ein schon teilnehmendes Fahrzeug seinen Zielort ändern möchte.

Dies bietet den Vorteil, dass das Verfahren dynamisch auf geänderte Verkehrssituationen eingehen und diese berücksichtigen kann. Ein optimierter Verkehrsfluss wird also in der Regel nur eine begrenzte Gültigkeitsdauer haben. In einer Ausführungsform wird der optimierte Verkehrsfluss in Echtzeit neu berechnet.

Gemäß einem zweiten Aspekt der Erfindung ist ein System zur Verkehrsflusssteuerung angegeben, wobei das System zur Durchführung des zuvor beschriebenen Verfahrens eingerichtet ist. Das System weißt auf
eine zentrale Verkehrsflusssteuerungseinheit, wobei die zentrale Verkehrsflusssteuerungseinheit in ein Kommunikationsnetzwerk eingebettet ist und wobei die zentrale Verkehrsflusssteuerungseinheit zur Hinterlegung von Infrastrukturinformationen und zum Aufbau von Datenverbindungen mit Fahrzeugen eingerichtet ist;
Fahrzeuge, wobei die Fahrzeuge zum Aufbau einer Datenverbindung mit der zentralen Verkehrsflusssteuerungseinheit und zum Übertragen von Parameter an die zentrale Verkehrsflusssteuerungseinheit eingerichtet sind,
wobei in der zentralen Verkehrsflusssteuerungseinheit ein Algorithmus implementiert ist, der eingerichtet ist, basierend auf der Basis der Parameter und der Infrastrukturinformationen einen optimierten Verkehrsfluss für die Fahrzeuge und ein individuelles Fahrprofil für die einzelnen Fahrzeuge zu erstellen und über die Datenverbindung an die Fahrzeuge zu senden.

Gemäß einem dritten Aspekt der Erfindung ist ein Verfahren zum mobilen Betanken von Fahrzeugen, insbesondere PKWs, mit einem elektrischen Antrieb angegeben umfassend die folgenden Schritte:
Bereitstellen des vorstehend beschriebenen Systems zur Steuerung eines Verkehrsflusses von Fahrzeugen;
Bereitstellen von zumindest einer fahrbaren Betankungseinheit auf den Straßen, wobei die fahrbare Betankungseinheit mit aufgeladenen, insbesondere standardisierten, Akku-Modulen bestückt wird. Bei der fahrbaren Betankungseinheit handelt es sich vorzugsweise um LKWs, die mehrere Tonnen wechselbarer Akku-Module laden und transportieren können;
Übersenden einer Tankanfrage von einem Fahrzeug an die zentrale Verkehrsflusssteuerungseinheit. Die Tankanfrage kann aktiv von dem Fahrer eines Fahrzeugs übersendet werden und/oder das Fahrzeug überwacht automatisch den Ladezustand seiner Akku-Module und kann bei einem unterschreiten von festgelegten Schwellenwerten automatisiert die Tankanfrage übersenden;
Erstellen eines ersten individuellen Tank-Fahrprofils für das zu betankende Fahrzeug durch den auf der zentralen Verkehrsflusssteuerungseinheit implementierten Algorithmus und Übermittlung des ersten Tank-Fahrprofils an das zu betankende Fahrzeug;
Hinführen des zu betankenden Fahrzeugs an die fahrbare Betankungseinheit mittels des ersten individuellen Tank-Fahrprofils und Starten eines Tankvorgangs, indem entleerte Akku-Module des Fahrzeugs von Akku-Modulen der fahrbaren Betankungseinheit mit Energie versorgt/geladen werden.

Die fahrbare Betankungseinheit kann vorzugsweise ihre entleerten Akku-Module an zentralen Akkus-Wechselstationen, z.B. wie in DE 10 2018 118 945 A1 beschrieben, austauschen. Die zentrale Verkehrsflusssteuereinheit kann ermitteln wo sich das zu betankende Fahrzeug relativ zu der fahrbaren Betankungseinheit befindet und wie schnell und in welche Richtung beide unterwegs ist. Vorzugsweise extrahiert die zentrale Verkehrsflusssteuerungseinheit hierzu lediglich die entsprechenden Daten aus dem individuellen Fahrprofil des Fahrzeugs und der fahrbaren Betankungseinheit. Der Algorithmus berechnet daraufhin das Tank-Fahrprofil so, dass sich das zu betankende Fahrzeug in einem ersten Schritt dem der Betankungseinheit, vorzugsweise möglichst schnell, nähert und sich in einem zweiten Schritt dem Geschwindigkeitsvektor der fahrbaren Betankungseinheit angleicht, wodurch ermöglicht wird, dass das zu betankende Fahrzeug an die fahrbare Betankungseinheit ankoppeln kann und der Ladevorgang beginnt.

Hieraus ergibt sich der Vorteil, dass langwierige Ladevorgänge und Wartezeiten an stationären Tankstellen bei entleerten Batterien des e-Autos vermieden werden können und das Fahrzeug quasi während der Fahrt effizient und schnell geladen wird. Zusätzlich kann die fahrbare Betankungseinheit standardisierte geladene Akku-Module des e-Autos mit sich führen, die beispielsweise an einem Treffpunkt, z.B. an einem Parkplatz, mit den entleerten Akku-Module des e-Autos getauscht werden können.

Da sich das zu betankende Fahrzeug dem ebenfalls optimierten Fahrprofil der mobilen Betankungseinheit anpasst, fügt sich die mobile Betankungseinheit nahtlos in den optimierten Verkehrsfluss ein und vermeidet eine "Störung" der übrigen Verkehrsteilnehmer, was zu einem Stau führen könnte. Die Begriffe mobile Betankungseinheit und fahrbare Betankungseinheit sind im Rahmen dieser Erfindung als Synonyme zu verstehen.

Vorzugsweise erstellt die zentrale Verkehrsflusssteuerungseinheit für die mobile Betankungseinheit, insbesondere für eine als fahrbare e-Tankstelle ausgebildete mobile Betankungseinheit, ein zweites Tank-Fahrprofil.

Dies bietet den Vorteil, dass sich das zu betankende Fahrzeug und die fahrbare Betankungseinheit noch schneller einander nähern können, da das Fahrzeug mit dem ersten Tank-Fahrprofi an die mobile Betankungseinheit und die mobile Betankungseinheit mit dem zweiten Tank-Fahrprofi an das Fahrzeug herangeführt wird.

Ferner ist es möglich, dass für ein zweites e-Auto ein drittes Tank-Fahrprofil erstellt wird. Diese drei Tank-Fahrprofile können dann in einer Weise optimiert werden, dass der Zeitverlust durch das Tanken zumindest für die zwei e-Autos respektive für die zwei e-Autos und die fahrbare e-Tankstelle minimiert wird. Zur Berechnung dieser Optimierung können Parameter wie die gewünschten Lademengen und/oder der jeweilige Abstand der e-Autos zu der fahrbaren e-Tankstelle einfließen.

Gemäß einem vierten Aspekt der Erfindung ist eine fahrbare Betankungseinheit zum mobilen elektrischen Betanken von Fahrzeugen angegeben, die zur Durchführung des vorstehend beschriebenen Verfahrens eingerichtet ist.

Gemäß einem fünften Aspekt der Erfindung ist ein Fahrzeug, insbesondere ein e-Auto, angegeben, dass zum mobilen elektrischen Betanken durch die vorstehend beschriebene fahrbare Betankungseinheit eingerichtet ist und/oder das zur Durchführung eines der vorstehend beschriebenen Verfahren geeignet ist.

Im Folgenden werden bevorzugte Ausführungsbeispiele der vorliegenden Erfindung unter Bezugnahme auf die begleitenden Figuren erläutert:
- Fig. 1:: zeigt schematisch das Verfahren zur Steuerung eines Verkehrsflusses von Fahrzeugen.
- Fig. 2:: zeigt schematisch das Verfahren zur mobilen Betankung eines e-Autos.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

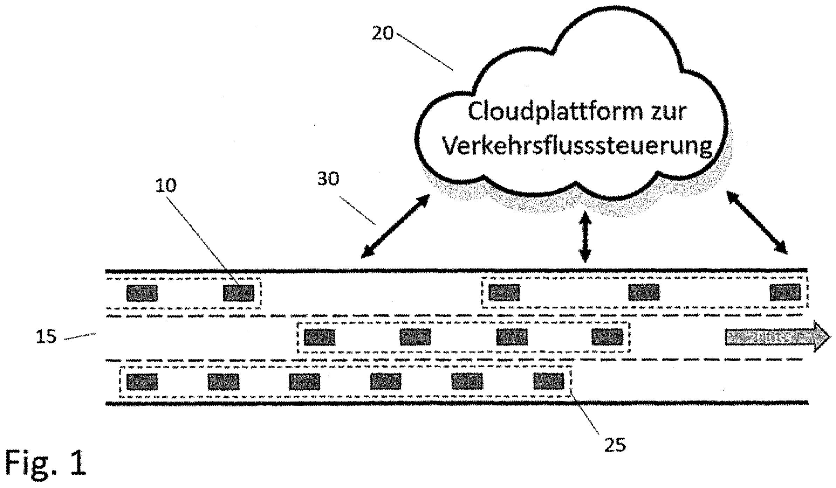

Fig. 1 zeigt schematisch das Verfahren zur Steuerung eines Verkehrsflusses von Fahrzeugen. Das Verfahren wird nachstehend beschrieben und in den technischen Kontext gesetzt.

Mit den technischen Möglichkeiten eines 5G-Netzes, der fortschreitenden Connectivity von neuen PKWs 10 und deren Intelligenten Assistenzsystemen, bis hin zu autonomen Fahrzeugen, sind die technischen Grundlagen für eine Automatisierung der Verkehrsflusssteuerung gelegt.

Solche Fahrzeuge 10 können optimal im Straßenverkehr 15 gesteuert zu werden, Ferner können relevanten Fahrzeugdaten, wie z.B. Position oder Geschwindigkeit, im Netz transparent gemacht und übermittelt werden. Die heutigen Konzepte sehen häufig immer noch den Fahrer des Fahrzeugs 10 als die bestimmende Größe im Fahrzeug 10 an, obwohl Analysen aufzeigen, dass der Fahrer häufig der größte Störfaktor im Straßenverkehr 15 ist ("Heute will jeder seine individuellen Ziele auf der Straße durchsetzen und fast alle der Beteiligten verfehlen gerade dadurch ihre Ziele!").

An dieser Stelle setzt die automatisierte Verkehrsflusssteuerung an:
Jedes Fahrzeug 10 ist mit einer Cloud-Plattform 20 verbunden, die den Verkehrsfluss 15 steuert. Diese Steuerung wird vorzugsweise auf Autobahnen bzw. mehrspurigen Straßen eingesetzt, ist jedoch auch für regionalere Strukturen vorstellbar. Der Fahrer kann dem Fahrzeug 10 seine Strecke bzw. Ziel und die gewünschte durchschnittliche Reisegeschwindigkeit angeben. Der Wunsch des PKW-Fahrers ist ein Parameter von vielen, den die Cloud-Plattform 20 zur Optimierung des Verkehrsflusses 15 und zur Verkehrsflusssteuerung heranzieht.

Folgende Parameter können ebenfalls zur Berechnung eines optimierten Verkehrsflusses 15 durch einen auf der Cloud-Plattform 20 implementierten Algorithmus verwendet werden:
• Verkehrsmenge bzw. Verkehrsdichte auf den jeweiligen Straßen;
• Zu- und Abfluss an Auf- und Abfahrten;
• Infrastruktur der Strecke (zum Beispiel Anzahl der Spuren, Tempolimits);
• Störungen;
• Verkehrsfluss;
• Nutzung jeweiliger Fahrbahnen;
• Wünsche der Verkehrsteilnehmer;
• mittlere Geschwindigkeit;
• Position der Fahrzeuge;
• Abstände;

Stabile Verkehrsflüsse entstehen, wenn viele Fahrzeuge 10 mit annähernd gleicher Geschwindigkeit, mit optimal niedrigen Abständen auf den Verkehrsspuren unterwegs sind und bevorzugt Pulks 25 von mehreren Fahrzeugen 10 formen.

Damit der Verkehrsfluss im Pulk 25 auch bei Störungen (z.B. Auf- oder Abfahrten) stabil bleibt, sollte der Pulk 25 vorausschauend gesteuert werden. Da die Cloud-Plattform 25 zur Verkehrsflusssteuerung fast alle Daten der Fahrzeuge 10 kennt, können die Pulks 25 optimal mit einem "großen Gesamtblick" (oben beschriebene Parameter) gesteuert werden.

Dies bedeutet, dass die Verkehrsflusssteuerung in die Steuerung des einzelnen Fahrzeugs 10 bzw. PKWs 10 eingreift, um die Pulks 25 optimal zu organisieren. Der Fahrer gibt damit einen Teil "seiner Hoheit" im PKW 10 an die Verkehrsflusssteuerung ab und profitiert selbst von der optimaleren Steuerung des Gesamtverkehrs, da Staus de facto fast völlig vermieden werden können.

PKWs 10 mit vollautomatisierten Assistenzsystemen, welche den PKW 10 nach Erhalt von Steuerbefehlen von der Cloud-Plattform 20 unter Berücksichtigung von Fahrerwünschen steuern, haben also folgende Vorteile:
Es entsteht ein gleichmäßiger Verkehrsfluss 15, wodurch mehr Kapazität auf den Straßen geschaffen wird und sich die PKWs 10 insgesamt schneller fortbewegen. Der Energieverbrauch wird gesenkt, sodass ein bedeutender Anteil zu Umweltschutz geleistet wird. Das Fahren auf den Straßen ist deutlich entspannter, was zu mehr Sicherheit auf den Straßen führt.

Die Pulks 25 werden abhängig von der Flusslage in verschiedenen Geschwindigkeitsstufen (z.B. 80 km/h, 100 km/h, 120 km/h, 130 km/h) und Größen (Anzahl Fahrzeuge) intelligent zusammengestellt, damit sich diese Pulks 25 auf den Fahrbahnen optimal ergänzen und möglich wenig gegenseitig beeinflussen. Ziel ist damit die Fahrbahnen mit optimalen Hochflusszuständen auszunutzen. Die Verkehrsflusssteuerung verändert diese Konstellationen in Echtzeit und reagiert damit auf Veränderung der relevanten Parameter. Eine mögliche Veränderung der Parameter kann sein, dass die Verkehrsmenge - insbesondere in der Rushhour- extrem ansteigt. Eine mögliche Maßnahme ist, dass vorausschauend Pulks mit höherer Geschwindigkeit aufgelöst (obwohl die Fahrer schneller fahren wollen) und in langsamere Pulks (z.B. 80km/h) vorausschauend einsortiert werden. Selbst wenn der PKW-Fahrer seinen Willen im Moment nicht bekommt, schneller zu fahren, profitiert er "langfristig" davon, da der optimierte Verkehrsfluss 15 insgesamt alle PKWs 10 schneller, stauärmer ans Ziel bringt.

Da Bereitsteller und Nutzer der Verkehrsinfrastruktur durch diese Verkehrsflusssteuerung profitieren, wäre es vorteilhaft, wenn möglichst viele bzw. alle Fahrzeuge 10 an dem Verfahren teilnehmen.

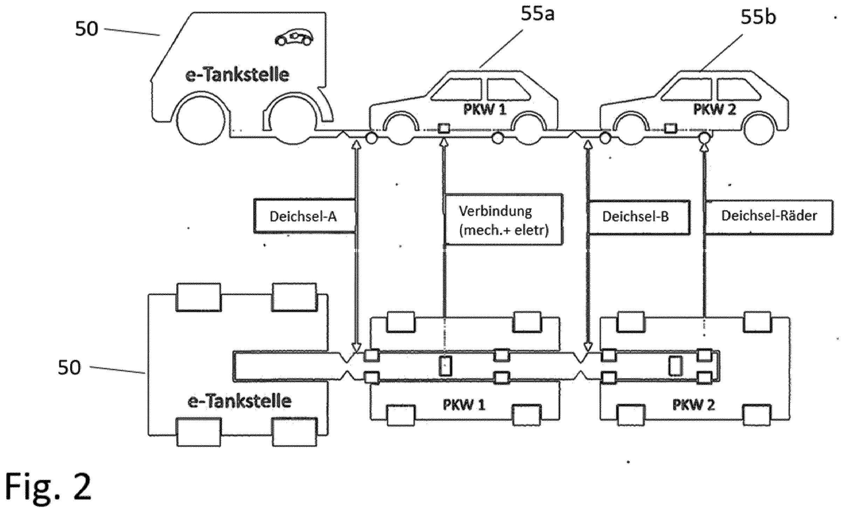

Die Verkehrsflusssteuerung mit den intelligenten Assistenzsystemen, bis hin zum autonomen Fahrzeug, ermöglichen geordnete, vorausschauend fahrende Pulks. Diese ermöglichen wiederum neue Anwendungsmöglichkeiten innerhalb des Pulks (> durch Verkehrsflusssteuerung "geschützter Bereich"). Eine davon ist die in Fig. 2 gezeigte "fahrende e-Tankstelle" 50 zum Laden von e-Autos 55 auf Fernstrecken. Die Akku-Aufladung eines e-Autos 55 an einer stationären Schnellladesäule ist nach heutigen Maßstäben ein für viele Fahrer inakzeptabler Zeitaufwand (30 - 60 Min.) auf einer Fernstrecke. Daher wird mit der nachfolgend beschriebenen fahrenden e-Tankstelle 50 eine technische Lösung geschaffen, die den Ladevorgang eines e-Autos 55 während des Fahrens bewerkstelligt und damit den zuvor genannten Zeitverlust eliminiert. Das ist neben der technischen Lösung auch ein mögliches neues Geschäftsmodell, um Ladestrom und den zugehörigen besonderen Service zu verkaufen.

Die fahrende e-Tankstelle 50 ist ein autonom gesteuertes Fahrzeug, welches auf den Fernstraßen vorzugsweise im 80km/h-Pulk seine Kreise zieht. In diesem Geschwindigkeitsverband steht die fahrende e-Tankstelle 50 mit der Cloud-Plattform 20 in Verbindung über die e-Autos 55 frühzeitig Betankungszeitfenster für eine Schnellaufladung (ca. 30 Min. während der Fahrt) auf der Fernstrecke buchen können.

Nachfolgend ein konkretes Ausführungsbeispiel:
Die e-Tankstelle 50 kann in dieser Ausführung gleichzeitig zwei e-Autos 55 laden.

Nach der deutschen StVO ist die e-Tankstelle 50 mit den gekoppelten e-Autos 55 ein Gliederzug, der eine maximale Gesamtlänge von 18,75m haben darf. Die e-Autos 55 sollten eine maximale Länge von 5 m nicht überschreiten und eine Bodenfreiheit von mindesten 12 cm besitzen. Die fahrbare e-Tankstelle 50 ist als 7,5-Tonner ausgelegt und hat ca. 4 Tonnen wechselbarer Batteriezellen mit ca. 1200 kWh on Board. Damit kann die e-Tankstelle 50 in ca. 3 Stunden 12 Fahrzeuge (Standard e-Auto der nächsten Generation > 75kWh Kapazität, 250kg Akku bei ca. 600km Reichweite) während der Fahrt betanken und legt dabei ca. 240km zurück. Im Anschluss muss die e-Tankstelle 50 bei einem Zwischenstopp an einer Servicestation ihre leeren wechselbaren Batteriezellen gegen geladene wechselbare Batteriezellen austauschen (dezentrale Strukturen, um später gewechselte Akkus mit erneuerbaren Energien wieder zu laden) und kann danach wieder auf die Autobahn.

Das Akku-Wechseln kann wie in DE 10 2018 118 945 A1 gelehrt technisch umgesetzt werden.

Bei einem täglichen Einsatz der autonomen e-Tankstelle 50 von 5:00 bis 21:00 Uhr (Kernzeiten) können bis zu sechzig e-Autos 55 während der Fahrt geladen werden.

Ein möglicher Ablauf einer e-Betankungsprozedur ist wie folgt:
Die e-Tankstelle 50 rollt in einem 80km/h-Pulk (siehe Fig. 1) und wartet während der Fahrt auf Kundschaft zum Laden.

Über die Cloud-Plattform 20, welche zusätzlich die e-Tankstellen 50 steuern kann und ständig mit diesen in Verbindung steht, buchen e-Autos 55 frühzeitig Betankungszeitfenster für eine Schnellaufladung (ca. 30 Min während der Fahrt) auf ihrer Fahrtstrecke. Die Cloud-Plattform 20 leitet die e-Autos 55 auf der Fahrt in den richtigen 80-er Pulk und das e-Auto 55 positioniert sich im sicheren Abstand hinter der e-Tankstelle 50. Im Idealfall wird dies so koordiniert, dass sich zwei e-Autos 55 zeitnah hinter der e-Tankstelle 50 einordnen.

Bei der e-Tankstelle 50 sind beide Deichseln (A + B) auf der Fahrbahn und rollen hinter der e-Tankstelle 50 her. Die e-Tankstelle 50 übernimmt die Kontrolle über das e-Auto 55, indem die e-Tankstelle 50 Steuerbefehle zum Ablauf des Tankvorgangs über das 5G-Netz an die Assistenzsysteme des e-Autos 55 sendet - vorzugsweise wird dies über ein sicheres und vorgegebenes Protokoll realisiert. Die e-Tankstelle 50 hat somit Kontrolle über den Andockprozess (incl. Beschleunigung, Verzögerung, Richtung).

Das erste e-Auto 55a wird langsam an die e-Tankstelle 50 und die Deichseln herangeführt. Sensorüberwacht fährt das erste e-Auto 55 über einen mechanischen/elektrischen Verbindungspunkt der Deichsel-A, welcher anschließend vollautomatisch arretiert wird (feste mechanische u, elektrische Verbindung). Damit fährt das e-Auto 55a nicht mehr selbst, sondern wird von der Deichsel-A gezogen. Der Ladevorgang beginnt. Da die e-Tankstelle 50 immer noch die volle Kontrolle über das e-Auto 55a hat, ist auch die Bremsanlage gekoppelt und damit ein sicheres "gebremstes" Gespann.

Die gleiche Prozedur wird anschließend mit dem zweiten e-Auto 55b durchgeführt, welches an der Deichsel-B angedockt wird. Nach ca. 30 Minuten Schnellladezeit (Akkus zu ca. 80% aufgeladen), in der beide Fahrzeuge als Anhänger gezogen wurden (ca. 40 Km), werden die automatisierten Andockmanöver in umgekehrter Reihenfolge zum Abdocken durchgeführt.

Sobald das jeweilige e-Auto 55 wieder in sicherem Abstand zur e-Tankstelle 50 ist, wird dem e-Auto 55 die volle Kontrolle übergeben und der Tankvorgang ist abgeschlossen. Der Bezahlvorgang ist ebenfalls voll automatisiert. Wenn beide e-Autos 55a,b die Hoheit wieder übernommen haben, kann der nächste Tankzyklus mit einem neuen e-Auto-Paar beginnen.

Während die e-Autos automatisch an den Deichseln A u, B arretiert sind, ziehen sich die Deichseln durch die Arretierung an den Unterboden der e-Autos und verlieren damit den Bodenkontakt. Das Gespann ist damit noch sicherer, da nur die Autos als reine Anhänger fungieren. Die Deichsel-A kann bei einer "Leerfahrt" oder nur einem e-Auto als Kunden hydraulisch in die e-Tankstelle 50 eingezogen werden. Dann folgt nur noch die verkürzte Deichsel-B als "kleiner Anhänger" (Länge ca. 3 m) auf der Straße.

Bei den e-Autos sind vorzugsweise neben den intelligenten Assistenzsystemen, ein einfacher standardisierter Arretierungsmechanismus und ein elektrisches Verbindungselement am Unterboden des Fahrzeugs vorgesehen, um an der Betankungsprozedur teilzunehmen.

Die e-Tank-Cloudplattform plant in Abhängigkeit der Strecke des Kunden und dessen geplantem Tankzeitfenster die optimale Kontaktstelle zwischen e-Auto und verfügbarer e-Tankstelle auf der Wegstrecke, um relativ zeitneutral mit der Anbahnung und der Durchführung des Tankvorganges unterwegs zu sein. Der tatsächliche Zeitverlust beim 30-minütigen Schnellladen bei Tempo 80 entspricht etwa einem konventionellen Tankvorgang eines Verbrenners beim Kraftstofftanken an einer heute üblichen Tankstelle (ca. 10 Minuten). Während der Schnellladezeit am Anhängerhaken kann der e-Autofahrer z.B. Zeitung lesen und entspannen.

Als weitere Ausführungsform ist eine im Bedarfsfall aus der e-Tankstelle ausfahrbare kurze Verbindungseinheit zum e-Auto ohne Bodenkontakt möglich. So könnte ein e-Auto zum Schnellladen gekoppelt und gezogen werden. Dies erfordert jedoch auch einen standardisierten Andockmechanismus in der Frontpartie des e-Autos."

## Patentansprüche

1. Verfahren zum mobilen Betanken von Fahrzeugen, insbesondere PKWs, mit einem elektrischen Antrieb, umfassend die folgenden Schritte:
Bereitstellen eines Systems zur Steuerung eines Verkehrsflusses von Fahrzeugen, wobei das System aufweist:
eine zentrale Verkehrsflusssteuerungseinheit (20), wobei die zentrale Verkehrsflusssteuerungseinheit (20) in ein Kommunikationsnetzwerk (30) eingebettet ist, wobei die zentrale Verkehrsflusssteuerungseinheit (20) zur Hinterlegung von Infrastrukturinformationen und zum Aufbau von Datenverbindungen mit Fahrzeugen (10) eingerichtet ist; Fahrzeuge (10), wobei die Fahrzeuge (10) zum Aufbau einer Datenverbindung mit der zentralen Verkehrsflusssteuerungseinheit (20) und zum Übertragen von Parametern an die zentrale Verkehrsflusssteuerungseinheit (20) eingerichtet sind, wobei die Fahrzeuge eingerichtet sind Ziel- und/oder Statusparameter, nämlich eine aktuelle Geschwindigkeit und eine Position des Fahrzeugs, an die zentrale Verkehrsflusssteuerungseinheit (20) zu übertragen,
wobei die zentrale Verkehrsflusssteuerungseinheit (20) einen Algorithmus aufweist, der eingerichtet ist, basierend auf den Parametern und den Infrastrukturinformationen einen optimierten Verkehrsfluss (15) für die Fahrzeuge (10) und ein individuelles Fahrprofil für die einzelnen Fahrzeuge (10) zu erstellen und über die Datenverbindung an die Fahrzeuge (10) zu senden, wobei der Algorithmus eingerichtet ist die Optimierung mittels eines Simulated Annealing Verfahrens zu berechnen, das ein Abbruchkriterium für den Optimierungsprozess hinsichtlich einer Minimierung der Gesamtfahrzeit aller beteiligten Fahrzeuge bereitstellt, wobei die Optimierung auf eine Verlängerung der Fahrzeit und/oder der Fahrstrecke eines der Fahrzeuge auf nicht mehr als 5% beschränkt ist;
Bereitstellen von zumindest einer fahrbaren Betankungseinheit (50), insbesondere einer fahrbaren e-Tankstelle (50), wobei die fahrbare Betankungseinheit (50) mit aufgeladenen, insbesondere standardisierten, Akku-Modulen bestückt ist,
Übersenden einer Tankanfrage von einem Fahrzeug (10) an die zentrale Verkehrsflusssteuerungseinheit (20),
wobei der auf der zentralen Verkehrsflusssteuerungseinheit (20) implementierte Algorithmus für das zu betankende Fahrzeug (10) ein erstes Tank-Fahrprofil erstellt und an das zu betankende Fahrzeug übermittelt,
wobei das erste individuelle Tank-Fahrprofil das zu betankende Fahrzeug (10) an die fahrbare Betankungseinheit (50) hinführt und an der fahrbaren Betankungseinheit (50) einen elektrischen Tankvorgang ermöglicht.

2. Verfahren nach Anspruch 1, **dadurch gekennzeichnet, dass** die zentrale Verkehrsflusssteuerungseinheit für die fahrbare Betankungseinheit (50) ein zweites Tank-Fahrprofil erstellt.

3. Verfahren nach einem der Ansprüche 1 bis 2, **dadurch gekennzeichnet, dass** eine Mehrzahl von Fahrzeugen gleichzeitig betankt wird.

4. Fahrbare Betankungseinheit zum mobilen elektrischen Betanken von Fahrzeugen, eingerichtet zur Durchführung eines Verfahrens nach einem der Ansprüche 1-3.

## Claims

1. A method for mobile refueling of vehicles, in particular passenger cars, with an electric drive, comprising the following steps:
Providing a system for controlling a traffic flow of vehicles, wherein the system comprises:
a central traffic flow control unit (20), wherein the central traffic flow control unit (20) is embedded in a communication network (30), wherein the central traffic flow control unit (20) is configured to store infrastructure information and to establish data connections with vehicles (10);
vehicles (10), wherein the vehicles (10) are configured to establish a data connection with the central traffic flow control unit (20) and to transmit parameters to the central traffic flow control unit (20), wherein the vehicles are configured to transmit destination and/or status parameters, namely a current speed and a position of the vehicle, to the central traffic flow control unit (20),
wherein the central traffic flow control unit (20) comprises an algorithm configured to generate, based on the parameters and the infrastructure information, an optimized traffic flow (15) for the vehicles (10) and an individual driving profile for each vehicle (10), and to transmit these to the vehicles (10) via the data connection, wherein the algorithm is configured to calculate the optimization using a simulated annealing method that provides a termination criterion for the optimization process with respect to minimizing the total travel time of all participating vehicles, wherein the optimization is limited to an increase in the travel time and/or travel distance of any of the vehicles to no more than 5%;
providing at least one mobile refueling unit (50), in particular a mobile e-refueling station (50), wherein the mobile refueling unit (50) is equipped with charged, in particular standardized, battery modules,
Sending a refueling request from a vehicle (10) to the central traffic flow control unit (20),
wherein the algorithm implemented on the central traffic flow control unit (20) creates a first refueling driving profile for the vehicle (10) to be refueled and transmits it to the vehicle to be refueled,
wherein the first individual refueling driving profile guides the vehicle (10) to be refueled to the mobile refueling unit (50) and enables an electrical refueling process at the mobile refueling unit (50).

2. The method according to claim 1, **characterized in that** the central traffic flow control unit creates a second refueling driving profile for the mobile refueling unit (50).

3. The method according to any one of claims 1 to 2, **characterized in that** a plurality of vehicles are refueled simultaneously.

4. A mobile refueling unit for the mobile electric refueling of vehicles, configured to perform a method according to any one of claims 1-3.

## Revendications

1. Procédé de ravitaillement mobile de véhicules, en particulier de véhicules de tourisme, à propulsion électrique, comprenant les étapes suivantes :
fourniture d'un système destiné à commander un flux de circulation des véhicules, le système comprenant :
une unité centrale de commande de flux de circulation (20), l'unité centrale de commande de flux de circulation (20) étant intégrée dans un réseau de communication (30), l'unité centrale de commande de flux de circulation (20) étant configurée pour stocker des informations d'infrastructure et pour établir des connexions de données avec des véhicules (10) ;
des véhicules (10), les véhicules (10) étant conçus pour établir une connexion de données avec l'unité centrale de commande de flux de circulation (20) et pour transmettre des paramètres à l'unité centrale de commande de flux de circulation (20), les véhicules étant conçus pour transmettre des paramètres de cible et/ou d'état, en particulier une vitesse actuelle et une position du véhicule, à l'unité centrale de commande de flux de circulation (20),
l'unité centrale de commande de flux de circulation (20) possédant un algorithme qui est conçu pour, sur la base des paramètres et des informations d'infrastructure, créer un flux de circulation optimisé (15) pour les véhicules (10) et un profil de conduite individuel pour les véhicules (10) individuels et pour l'envoyer aux véhicules (10) par l'intermédiaire de la connexion de données, l'algorithme étant conçu pour calculer l'optimisation au moyen d'un procédé de recuit simulé, qui fournit un critère d'abandon pour le processus d'optimisation en ce qui concerne la minimisation du temps de conduite total de tous les véhicules concernés, l'optimisation étant limitée à une prolongation du temps de conduite et/ou de l'itinéraire de conduite de l'un des véhicules à un maximum de 5 % ;
fourniture d'au moins une unité de ravitaillement mobile (50), en particulier une borne de recharge électrique mobile (50), l'unité de ravitaillement mobile (50) étant équipée de modules d'accumulateur chargés, en particulier normalisés, qui transmettent une demande de ravitaillement d'un véhicule (10) à l'unité centrale de commande de flux de circulation (20),
l'algorithme mis en œuvre sur l'unité centrale de commande de flux de circulation (20) créant un premier profil de déplacement de ravitaillement pour le véhicule (10) à ravitailler et le communiquant au véhicule à ravitailler,
le premier profil individuel de déplacement de ravitaillement guidant le véhicule (10) à ravitailler vers l'unité de ravitaillement mobile (50) et rendant possible une opération de ravitaillement électrique au niveau de l'unité de ravitaillement mobile (50).

2. Procédé selon la revendication 1, **caractérisé en ce que** l'unité centrale de commande de flux de circulation crée un deuxième profil de déplacement de ravitaillement pour l'unité de ravitaillement mobile (50).

3. Procédé selon l'une des revendications 1 à 2, **caractérisé en ce que** plusieurs véhicules sont ravitaillés en même temps.

4. Unité de ravitaillement mobile destinée au ravitaillement électrique mobile de véhicules, conçue pour mettre en œuvre un procédé selon l'une des revendications 1 à 3.
